# EUROPEAN PATENT APPLICATION

(11) **EP 3 572 336 A1**
(43) Date of publication of application: **27.11.2019**
(21) Application number: 17892198.7
(22) Date of filing: 16.11.2017
(51) Int. Cl.: B64G 1/64

(54) **SPACE DEBRIS CAPCURING DEVICE AND SPACE DEBRIS REMOVING DEVICE**

(30) Priority: 20.01.2017 JP 2017008532
(71) Applicant: IHI Corporation, Tokyo 135-8710 (JP)
(72) Inventor: SHIMAMURA Kazuo, Tokyo 135-8710 (JP); FUKUSHIGE Shinya, Tokyo 135-8710 (JP); HASHIMOTO Kozue, Tokyo 135-8710 (JP); KAWAMOTO Satomi, Chofu-shi Tokyo 182-8522 (JP); OHKAWA Yasushi, Chofu-shi Tokyo 182-8522 (JP); AOYAMA JunIchi, Chofu-shi Tokyo 182-8522 (JP)
(74) Representative: MERH-IP Matias Erny Reichl Hoffmann Patentanwälte PartG mbB
(86) International application number: PCT/JP2017/041197
(87) International publication number: WO 2018/135118

(57) **Abstract**

A space-debris capturing device (3) includes a harpoon (31, 41, 41') driven into target debris (X) as space debris to be removed. The harpoon (31, 41, 41') includes a first harpoon part (43) having a large diameter, and a second harpoon part (44) having a diameter smaller than the diameter of the first harpoon part (43) and protruding from a leading surface (43a) in the direction of the drive of the first harpoon part (43) into the target debris (X).

## Description

### TECHNICAL FIELD

The present disclosure relates to a space-debris removing device suitable for removal of space debris such as a relatively large-sized used satellite or rocket in orbit around the Earth.

### BACKGROUND ART

Currently, artificial satellites for various kinds of purposes such as military satellites, communication satellites, scientific satellites, observation satellites, and navigation satellites are orbiting. When having ceased to function due to failure or having reached lifetime after completion of their missions, in many cases these artificial satellites are left in orbit as space debris. In addition, wreckage of rockets used to launch artificial satellites or the like for example, is left in orbit as space debris.

The number of pieces of space debris currently in orbit number in the thousands or more, and self-multiplication in which the number increases through natural collision has started. About five pieces at least of space debris need to be removed per year to stop the self-multiplication of space debris. Space debris are attracted by the gravitational force of Earth, and eventually fall and disappear, but natural fall needs a long time, and thus is not efficient. In an already disclosed method, a deceleration device is attached to space debris to actively remove the space debris.

The applicant has already disclosed a method of attaching a deceleration device to space debris. In the method, for example, a harpoon shot from a space-debris removing device is driven into space debris (refer to Patent Literature 1).

In this method of removing space debris including driving a harpoon into space debris, it is considered that the space debris includes a part reinforced by a beam having a truss structure, for example. Specifically, the space-debris removing device drives a plurality of harpoons into the space debris so that the deceleration device is attached to the space debris through a harpoon driven into a non-reinforced part.

### CITATION LIST

### PATENT LITERATURE

Patent Literature 1: WO 2013/065795

### SUMMARY OF INVENTION

### TECHNICAL PROBLEM

Driving a harpoon such that the harpoon penetrates a reinforced part as well requires energy in an amount several times to several tens of times larger than normally needed, and thus the size of the space-debris removing device needs to be increased to withstand the reaction force. When the above-described removing method including driving a plurality of harpoons into space debris is applied, each harpoon can be shot with normal energy, and thus an increase in the size of the removing device can be avoided.

However, the method requires structures for shooting harpoons in a number equal to the number of harpoons, and thus it is impossible to avoid some increase in the size of the space-debris removing device accordingly.

The present disclosure is intended to reduce the force necessary for driving a harpoon into space debris to attach a device having a space-debris removing function to the space debris and a reaction force generated at the driving of the harpoon.

### SOLUTION TO PROBLEM

An aspect of the present disclosure is a space-debris capturing device including a harpoon to be driven into target debris as space debris to be removed. The harpoon includes a first harpoon part having a large diameter, and a second harpoon part having a diameter smaller than the diameter of the first harpoon part and protruding from a leading surface in the direction of the drive of the first harpoon part into the target debris.

### EFFECTS OF INVENTION

According to the above-described space-debris capturing device, it is possible to reduce the force necessary for driving a harpoon into space debris to attach a device having a space-debris removing function to the space debris and reaction force generated at the driving of the harpoon.

### BRIEF DESCRIPTION OF DRAWINGS

[Fig. 1] Fig. 1 illustrates a space-debris removing device to which a space-debris capturing device according to several embodiments is applied.
[Fig. 2] Fig. 2 illustrates a state in which the space-debris removing device is illustrated in Fig. 1 transitioned to a target-debris capturing attitude.
[Fig. 3] Fig. 3 is a partially cross-sectional view illustrating a basic configuration of a space-debris capturing device mounted on the space-debris removing device illustrated in Fig. 1.
[Fig. 4] Fig. 4 is a diagram illustrating operation of the space-debris capturing device illustrated in Fig. 3: (a) illustrates an approaching state; (b) illustrates a shooting angle adjusting state; and (c) illustrates a shooting angle adjustment completion state.
[Fig. 5] Fig. 5 is a diagram illustrating operation of the space-debris capturing device illustrated in Fig. 3: (a) illustrates a shot state, (b) illustrates an end-mass separating state, and (c) illustrates a tether released state.
[Fig. 6] Fig. 6 is a diagram illustrating operation of the space-debris removing device illustrated in Fig. 1: (a) illustrates a moving state; (b) illustrates an approaching state; and (c) illustrates a captured state.
[Fig. 7] Fig. 7 is a diagram illustrating operation of the space-debris removing device illustrated in Fig. 1: (a) illustrates a left state; and (b) illustrates a tether released state.
[Fig. 8] Fig. 8 is a diagram illustrating a modification of a space-debris removing device to which the space-debris capturing device according to several embodiments is applied: (a) is a side view; and (b) is a front view.
[Fig. 9] Fig. 9 is a diagram illustrating an exemplary specific configuration of the space-debris removing device to which the space-debris capturing device according to several embodiments is applied: (a) illustrates an exemplary specific configuration; and (b) illustrates another exemplary specific configuration.
[Fig. 10] Fig. 10 illustrates an exemplary specific configuration of a harpoon of a space-debris capturing device according to a first embodiment.
[Fig. 11] Fig. 11 is a diagram illustrating an exemplary specific configuration of a harpoon of a space-debris capturing device according to a second embodiment: (a) is a partially cross-sectional view; and (b) is a transverse sectional view of a second harpoon part in (a).
[Fig. 12] Fig. 12 is a diagram illustrating the process of driving the harpoon illustrated in Fig. 11 into target debris: (a) illustrates a state in which a leading end part of the second harpoon part is driven into the space debris; (b) illustrates a state in which the second harpoon part has entered inside the space debris; and (c) illustrates a state in which the second harpoon part is locked to the back of the surface of the space debris.
[Fig. 13] Fig. 13 illustrates a modification of the second harpoon part illustrated in Fig. 11.
[Fig. 14] Fig. 14 is a diagram illustrating modifications of the second harpoon part illustrated in Fig. 11: (a) illustrates a modification; (b) illustrates another modification; and (c) illustrates another modification.

### DESCRIPTION OF EMBODIMENTS

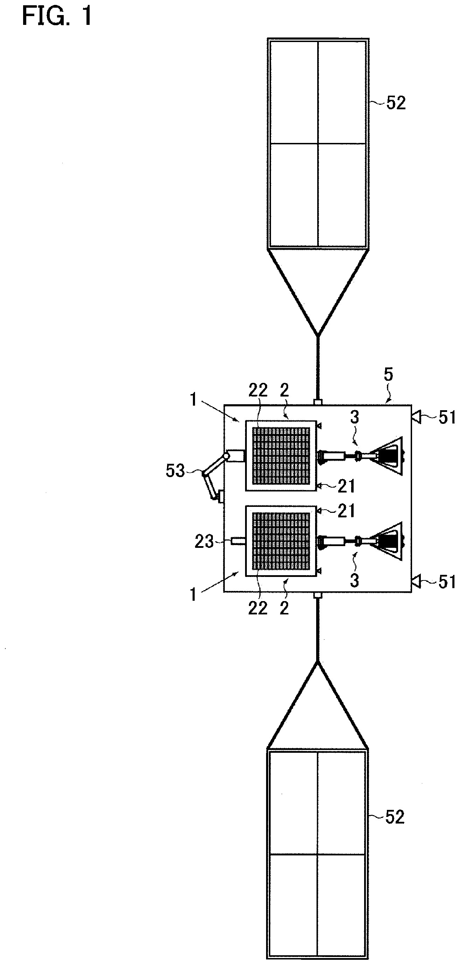

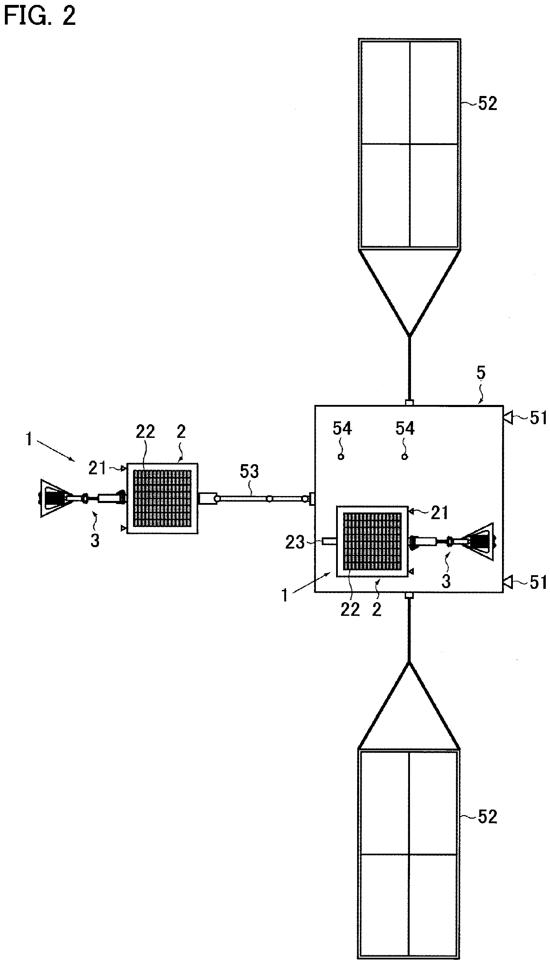

The following describes several embodiments with reference to the accompanying drawings. The description is first made on, with reference to Figs. 1 to 9, a space-debris removing device (hereinafter referred to as "debris removing device") to which a space-debris capturing device (hereinafter referred to as "debris capturing device") is applied. Fig. 1 illustrates a debris removing device to which a debris capturing device according to several embodiments is applied. Fig. 2 illustrates a state in which the debris removing device is illustrated in Fig. 1, transitioned to an attitude for capturing target debris as space debris to be removed.

This debris removing device 1 illustrated in Fig. 1 captures space debris (hereinafter simply referred to as "debris") drifting in outer space and removes the debris from orbit. As illustrated in Figs. 1 to 7, the debris removing device 1 includes an end-mass 2 as a body unit, a debris capturing device 3 detachably mounted on the end-mass 2, and a tether 4 coupling the debris capturing device 3 and the end-mass 2. The end-mass 2 is capable of approaching debris X as target debris.

The debris capturing device 3 includes a harpoon 31 to be driven into the debris X, a shooting device 32 configured to shoot the harpoon 31 for driving into the debris X, a guide 33, and a switch 34 configured to transmit a shooting signal to the shooting device 32. The guide 33 is disposed to be capable of coming into contact with the surface of the debris X, and adjusts the shooting angle of the harpoon 31 with respect to the surface of the debris X. After having injected the harpoon 31 into the debris X, the debris capturing device 3 separates the end-mass 2 from the debris capturing device 3, and releases the tether 4 into outer space.

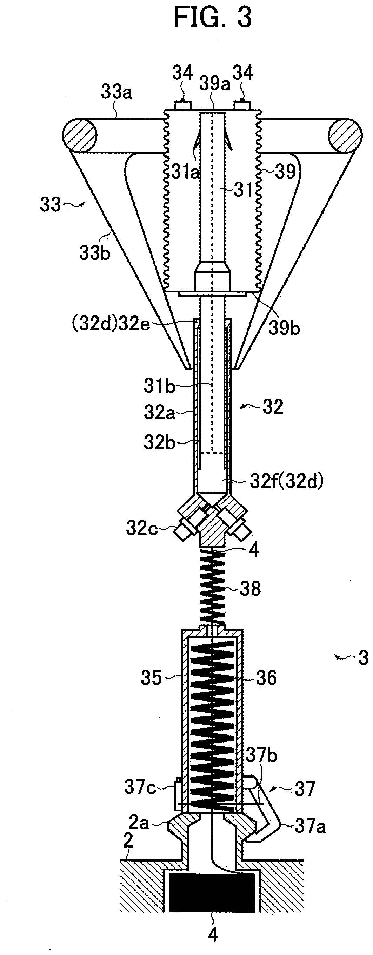

The end-mass 2 is a mass body for deploying the tether 4 in outer space by using gravitational force acting thereon and thrust force exerted by a thruster or the like. The end-mass 2 may be also used as a control device of the debris capturing device 3 and a container housing the tether 4. For example, as illustrated in Fig. 3, the tether 4 is wound in a coil shape and housed in the end-mass 2. The end-mass 2 includes a tether release port 2a from which the tether 4 is externally pulled out.

As illustrated in Fig. 1, the end-mass 2 may include a propulsion system 21 (for example, a thruster or the like) for controlling the moving direction and attitude of the end-mass 2 at deployment of the tether 4. A solar cell panel 22 may be disposed on the surface of the end-mass 2. The solar cell panel 22 is included in a solar power generation device (electrical power source) for supplying electrical power to the debris capturing device 3. The propulsion system 21 and the electrical power source are not limited to illustrated configurations, but may be omitted as necessary.

The debris removing device 1 is mounted and moved on a mother ship 5 such as a small-sized satellite. The mother ship 5 includes, for example, a propulsion system 51 such as a thruster, a solar cell paddle 52 configured to supply electrical power, a robotic arm 53 configured to grasp and operate the debris removing device 1, and a fixation portion 54 (for example, an opening) for fixing the end-mass 2 to the mother ship 5. When the debris removing device 1 (the end-mass 2) is mounted in this manner on the mother ship 5 including the propulsion system 51, a propulsion system and a large-sized electrical power source of the debris removing device 1 can be omitted, which leads to simplification and lightweight of the debris removing device 1. For example, the two debris removing devices 1 are disposed on each of the upper and lower surfaces of the mother ship 5 (four in total), but not limited to this number and arrangement.

The end-mass 2 includes, at a rear end part, a grip portion 23 to be grasped by the robotic arm 53. The grip portion 23 is not limited to the illustrated shape but may have any shape that allows grasp by the robotic arm 53. Until transitioning to work for capturing the debris X, the mother ship 5 moves in a state in which the debris removing device 1 is fixed to the surface thereof and retracted as illustrated in Fig. 1. Then, when approaching the debris X to be removed and transitioning to the capturing work, the mother ship 5 separates the end-mass 2 from the surface of the mother ship 5 by using the robotic arm 53. Then, as illustrated in Fig. 2, the debris removing device 1 is positioned by turning the robotic arm 53 squarely forward (extending forward) so that a leading end of the debris removing device 1 (the direction in which the harpoon 31 is shot) points forward.

The debris capturing device 3 includes the following components in addition to the harpoon 31, the shooting device 32, the guide 33, and the switch 34 as illustrated in Fig. 3. Specifically, the debris capturing device 3 includes a casing 35 connected with the tether release port 2a of the end-mass 2, a coil spring 36 housed in the casing 35, and a lock device 37 for fixing the casing 35 to the tether release port 2a. The debris capturing device 3 also includes a buffer 38 disposed between the shooting device 32 and the casing 35.

The casing 35 is substantially tubular and has a diameter that allows it to be in contact with an end face of the tether release port 2a. The casing 35 has a rear end part in contact with a leading surface of the tether release port 2a and opened backward. The coil spring 36 is housed in the casing 35 while being compressed, and has a rear end in contact with the leading surface of the tether release port 2a through the opening of the casing 35. The lock device 37 includes a hook 37a engageable with an annular protrusion formed on the outer peripheral surface of a leading end part of the tether release port 2a, a wire 37b holding the hook 37a in an engaged state, and a wire cutter 37c configured to cut the wire 37b. The shape and configuration of the lock device 37 are merely exemplary and not limited to the illustrated shape and configuration.

The wire 37b is connected with the hook 37a to maintain the hook 37a in the engaged state with the tether release port 2a. To separate the end-mass 2 from the debris capturing device 3, the lock device 37 cuts the wire 37b by using the wire cutter 37c to remove the restraint on the hook 37a. When the restraint on the hook 37a is removed, biasing force exerted by the coil spring 36 allows the hook 37a to leave the tether release port 2a and push the tether release port 2a rearward so that the end-mass 2 is separated from the debris capturing device 3.

The shooting device 32 includes a cylinder 32a configured to regulate the moving direction of the harpoon 31, a piston 32b inserted into the cylinder 32a, a plurality of pyrotechnic valves 32c disposed at a rear end of the cylinder 32a, and a stopper mechanism 32d. When having received the shooting signal from the switch 34, the pyrotechnic valves 32c release gas into the cylinder 32a to push out the piston 32b. This configuration of the shooting device 32 is merely exemplary and may be a configuration using an electric motor, for example. The configuration may include only a single pyrotechnic valve 32c, or may include another explosive device or an electric motor.

The harpoon 31 is connected with a leading end of the piston 32b. The harpoon 31 is a rod component having a diameter that allows injection into the debris X and including a plurality of barbs 31a at a leading end part. The barbs 31a are provided to prevent removal of the harpoon 31 injected into the debris X. The leading end part of the harpoon 31 may be sharply pointed or may have a shape similar to those of the leading ends of a punch and a machining tool.

The stopper mechanism 32d sets the depth of injection of the harpoon 31 into the surface of the debris X. The stopper mechanism 32d includes, for example, a wall surface 32e formed at a leading end of the cylinder 32a, and an increased-diameter part 32f formed at a rear end of the piston 32b. With this configuration, when the harpoon 31 is shot from the shooting device 32, the increased-diameter part 32f of the piston 32b is locked to the wall surface 32e of the cylinder 32a, thereby preventing the harpoon 31 from separating from the shooting device 32 and flying out. In other words, a shooting distance (stroke) of the harpoon 31 can be defined by the distance between the wall surface 32e and the increased-diameter part 32f, and accordingly the injection depth of the harpoon 31 into the surface of the debris X can be set. The position of the increased-diameter part 32f is not limited to the rear end of the piston 32b, but the increased-diameter part 32f may be formed at a middle part of the piston 32b in accordance with a requested injection depth of the harpoon 31.

A gas-discharge flow path 31b may be formed from a leading end of the harpoon 31 to the piston 32b. The flow path 31b may extend along an axial center of the harpoon 31 and the piston 32b and bend toward a side surface of the piston 32b at the middle part of the piston 32b. With this configuration, when the harpoon 31 is injected into the debris X inside which some gas is accumulated, the gas inside the debris X can be released into outer space outside the debris X through the flow path 31b to prevent the occurrence of an explosion, fire, or the like of the debris X. The flow path 31b may be omitted as necessary.

The debris capturing device 3 may include a scattering prevention cover (for example, a bellows 39) covering an outer periphery of the harpoon 31, and having an opening (leading end part 39a) positioned on the front side of the leading end of the harpoon 31. The bellows 39 is an elastic body including an accordion made of, for example, copper at a side surface part, and can expand and contract in the direction in which the harpoon 31 extends. A rear end part 39b of the bellows 39 includes a bottom part connected with the harpoon 31 to seal the rear end part 39b. The scattering prevention cover is not limited to the bellows 39 thus illustrated but may be an elastic body, such as sponge.

Thus, when the harpoon 31 is injected into the debris X, the leading end part 39a of the bellows 39 stays at the surface of the debris X, but the rear end part 39b of the bellows 39 moves along with the harpoon 31, and the bellows 39 becomes compressed in the axial direction. In other words, when the harpoon 31 is injected into the debris X, the bellows 39 is pressed against the surface of the debris X to form a sealed space surrounded by the surface of the debris X, the side surface part, and the rear end part 39b of the bellows 39. As a result, scattering of pieces of the debris X or the like that occurs at the injection of the harpoon 31 can be prevented, thereby reducing generation of new debris. To avoid the release of gas into the bellows 39, the gas-discharge flow path 31b preferably extends to the back side of the rear end part 39b of the bellows 39, for example, to the rear end of the piston 32b part.

A plurality of switches 34 are disposed at the leading end part 39a (specifically, an edge part forming the opening) of the bellows 39. For example, at least three switches 34 are preferably disposed to sense a state in which the leading end part 39a of the bellows 39 is squarely facing the surface of the debris X. When the switches 34 are disposed at the leading end part 39a of the bellows 39 in this manner, the state in which the bellows 39 is squarely facing the surface of the debris X can be sensed. Then, when the harpoon 31 is injected into the debris X in this state, the shooting angle of the harpoon 31 can be adjusted to an appropriate range, and the sealed space can be easily formed.

The switches 34 are components configured to detect a state in which the leading end part 39a of the bellows 39 comes into contact with the surface of the debris X. The switches 34 may be what is called micro switches of a pressure-sensitive type or an energization type. The switches 34 are connected with the pyrotechnic valves 32c of the shooting device 32 through cables (not illustrated). When the leading end part 39a of the bellows 39 comes into contact with the surface of the debris X, the switches 34 transmit the shooting signal to the pyrotechnic valves 32c. The disposition places of the switches 34 are not limited to the leading end of the bellows 39, but the switches 34 may be disposed at a leading end of the guide 33 or a leading end of a dedicated guide supported by the debris capturing device 3.

The guide 33 is disposed outside the bellows 39. The guide 33 includes, for example, an annular rim 33a disposed at a leading end, and a spoke 33b supporting the rim 33a, and has a profile in a substantially circular cone shape having an increased diameter on the leading end side. The rim 33a is formed to have a diameter larger than that of the bellows 39. The spoke 33b has a rear end part connected with, for example, the cylinder 32a of the shooting device 32.

Thus, when the debris capturing device 3 obliquely approaches the surface of the debris X (while the axis of the harpoon 31 and the piston 32b is tilted relative to the surface of the debris X), the surface of the debris X first comes into contact with the rim 33a of the guide 33. Then, when the debris capturing device 3 further approaches the debris X in this state, the attitude of the debris capturing device 3 is controlled so that the debris capturing device 3 rotates with respect to the above-described contact point (around the contact point) of the guide 33 and the rim 33a is entirely brought into contact with the surface of the debris X. In other words, the guide 33 functions as an automatic aligning mechanism of the debris capturing device 3 to adjust the shooting angle of the harpoon 31 relative to the surface of the debris X.

The tether 4 housed in the end-mass 2 is connected with a rear end part of the shooting device 32 (cylinder 32a) through the tether release port 2a and the casing 35. The buffer 38 (for example, a spring) for reducing impact generated at the shooting of the harpoon 31 may be disposed between the shooting device 32 (cylinder 32a) and the casing 35. When such a buffer 38 is disposed, reaction force generated when the pyrotechnic valves 32c are ignited to shoot the harpoon 31 can be absorbed by the buffer 38. The buffer 38 is not limited to a spring but may be an elastic body such as rubber.

The tether 4 is released and deployed into outer space by separating the end-mass 2 from the debris capturing device 3 after the harpoon 31 is injected into the debris X. The tether 4 has conductivity and receives a Lorentz force due to the relation between current flowing through the tether 4 and a magnetic field in which the tether 4 is extended. As a result, the tether 4 is pulled, for example, in a direction opposite to the traveling direction of the debris X, thereby decelerating the debris X. Although not illustrated, the tether may be extended in the opposite direction (for example, to a side farther away from the Earth) to pull and accelerate the debris X in the traveling direction so that the orbit of the debris X is moved up and the debris X is removed from crowded orbit. An electron emitter or an electron collector may be provided at an end part of the tether 4 or the end-mass 2 to actively emit or collect electrons to or from surrounding outer space.

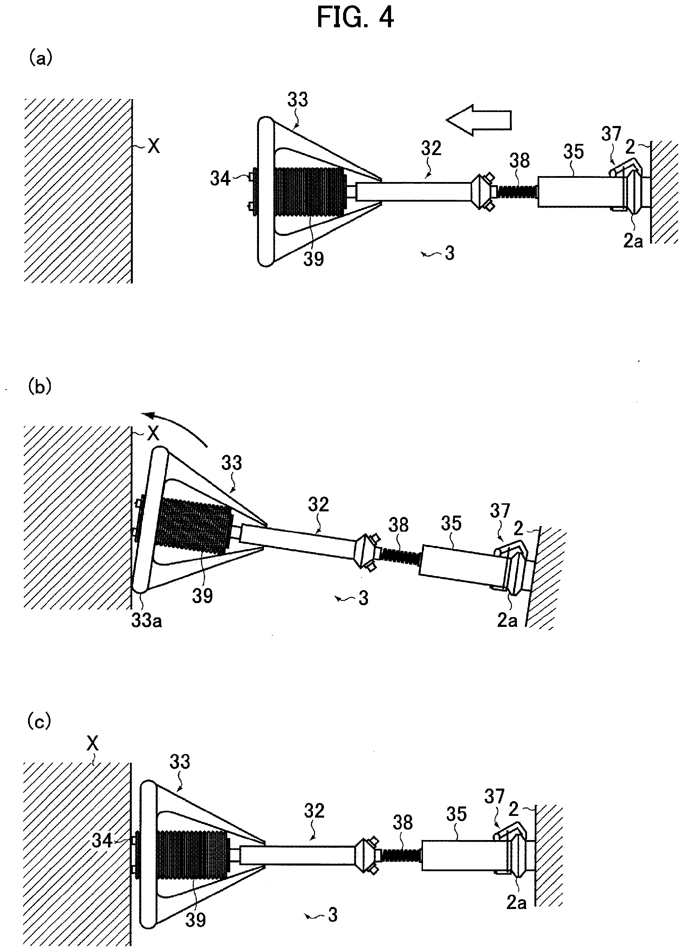

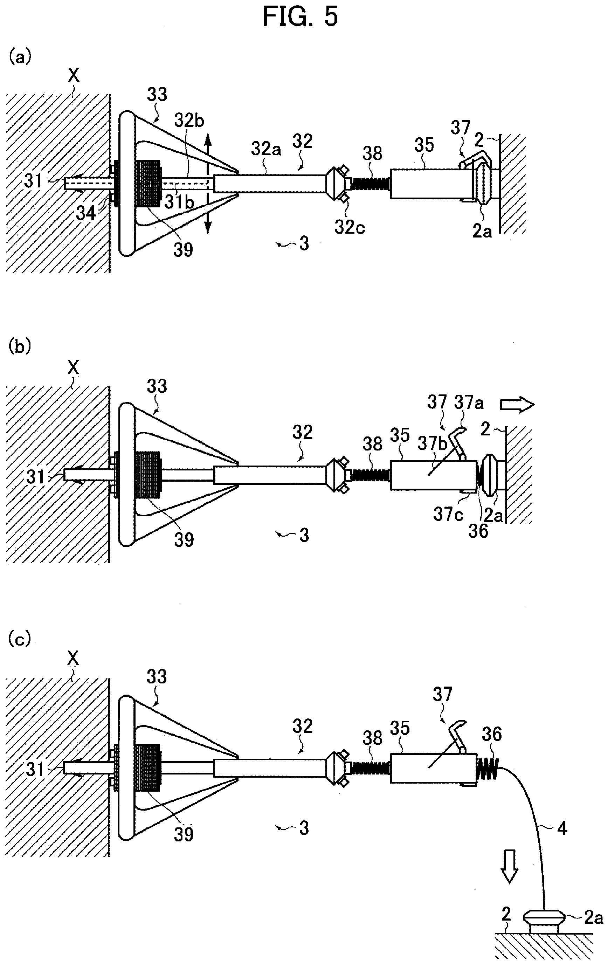

The following describes operation of the debris capturing device 3 with reference to Figs. 4 and 5. Figs. 4 and 5 are diagrams illustrating the operation of the debris capturing device 3. In Fig. 4, (a) illustrates an approaching state, (b) illustrates a shooting angle adjusting state, and (c) illustrates a shooting angle adjustment completion state. In Fig. 5, (a) illustrates a shot state, (b) illustrates an end-mass separating state, and (c) illustrates a tether released state.

As illustrated in Fig. 4(a), the debris capturing device 3 being connected with the end-mass 2 approaches the debris X together with the end-mass 2. When the debris capturing device 3 approaches while maintaining a state in which the axis of the harpoon 31 and the piston 32b is substantially perpendicular to the surface of the debris X, the switches 34 come into contact with the surface of the debris X as illustrated in Fig. 4(c), and the shooting signal is emitted.

However, when the debris capturing device 3 approaches obliquely to the surface of the debris X as illustrated in Fig. 4(b), the rim 33a of the guide 33 comes into contact with the surface of the debris X. Then, when the debris capturing device 3 slowly approaches the debris X in this state, the guide 33 corrects the attitude of the debris capturing device 3 with reference to the contact point of the rim 33a. Accordingly, the attitude of the debris capturing device 3 is corrected to be substantially perpendicular to the surface of the debris X as illustrated in Fig. 4(c).

As illustrated in Fig. 4(c), when the switches 34 come into contact with the surface of the debris X, the shooting signal is transmitted to the shooting device 32 (pyrotechnic valves 32c), and gas is released into the cylinder 32a through the pyrotechnic valves 32c so that the piston 32b is pressed out along the cylinder 32a. Through this operation, the harpoon 31 is shot from the shooting device 32 and injected into the debris X as illustrated in Fig. 5(a). In this case, since the injection depth of the harpoon 31 is set by the stopper mechanism 32d, the harpoon 31 is prevented from separating from the shooting device 32 and flying out.

Simultaneously, the bellows 39 is pressed against the surface of the debris X and compressed through relative movement between the surface of the debris X and the harpoon 31. Accordingly, the bellows 39 forms a sealed space around a part where the harpoon 31 is injected, thereby preventing scattering of pieces or the like generated at the injection of the harpoon 31. When gas is accumulated in the debris X, the gas is released into outer space through the flow path 31b. The reaction force at the shooting of the harpoon 31 is absorbed by the buffer 38.

The debris X can be captured by the debris capturing device 3 through injection of the harpoon 31 into the debris X. Then, the debris X needs to be decelerated. For this, the wire 37b of the lock device 37 is cut as illustrated in Fig. 5(b). When the wire 37b is cut, the holding of the hook 37a is canceled, and biasing force exerted by the coil spring 36 housed in the casing 35 pushes the end-mass 2 toward outer space in a direction departing from the debris capturing device 3. Then, as illustrated in Fig. 5(c), the end-mass 2 separates from the debris capturing device 3, and the tether 4 is released and extended into outer space.

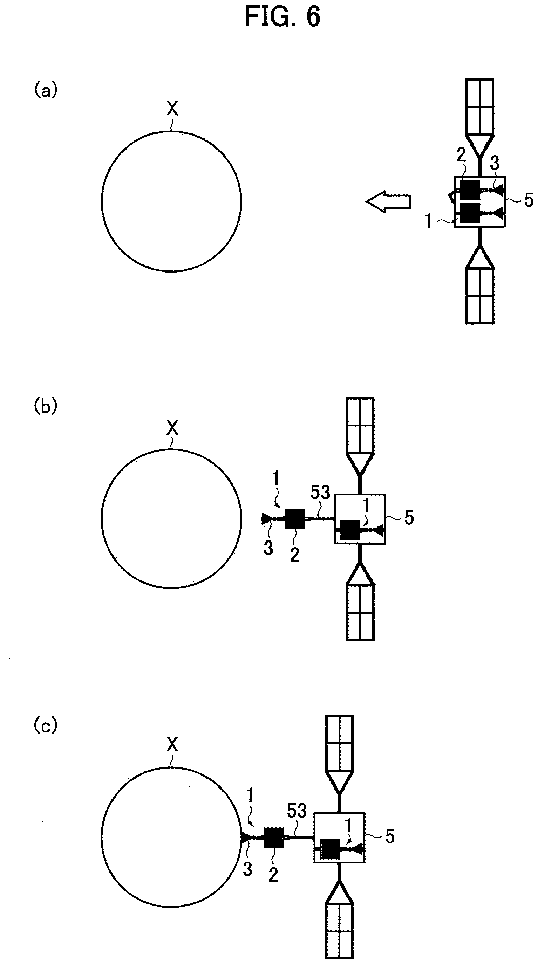

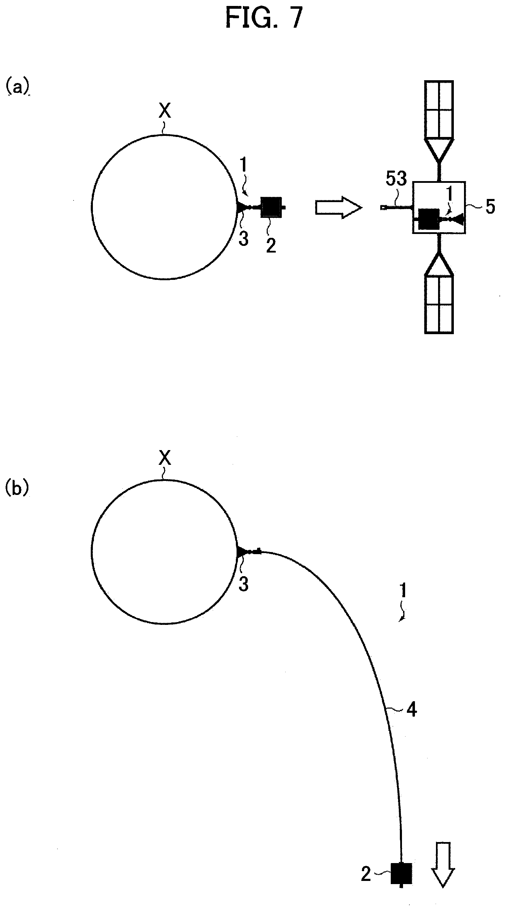

The following describes operation of the debris removing device 1 with reference to Figs. 6 and 7. Figs. 6 and 7 are diagrams illustrating the operation of the debris removing device 1. In Fig. 6, (a) illustrates a moving state, (b) illustrates an approaching state, and (c) illustrates a captured state. In Fig. 7, (a) illustrates a left state, and (b) illustrates a tether released state.

As illustrated in Fig. 6(a), the debris capturing device 3 is moved close to the debris X to be removed while being mounted on the mother ship 5. The debris X is orbiting in an irregular tumbling motion. For example, the mother ship 5 is injected to a position lower than the orbit of the debris X, and then gradually approaches the orbit by centrifugal force while approaching the debris X by using the propulsion system 51.

After the mother ship 5 is injected to the orbit of the debris X, as illustrated in Fig. 6(b), the mother ship 5 operates the robotic arm 53 to separate the end-mass 2 and the debris capturing device 3 from the mother ship 5, and positions the debris capturing device 3 in front of the mother ship 5.

The mother ship 5 in an attitude for capturing moves while determining the position of the mother ship 5 and the position of the debris X by using GPS or the like. In this case, a motion model of the debris X may be estimated by observing the debris X through an observation device such as a CCD camera or a laser radar, and a position to which the harpoon 31 is to be driven may be calculated. Then, as illustrated in Fig. 6(c), the mother ship 5 approaches the debris X so that the leading end of the debris capturing device 3 is brought into contact with the position to which the harpoon 31 is to be driven. The robotic arm 53 described above may be used to cause the leading end of the debris capturing device 3 to come into contact with the surface of the debris X, or the debris capturing device 3 may be shot from the end-mass 2 at a position close to the debris X to achieve the contact.

When the leading end of the debris capturing device 3 is brought into contact with the surface of the debris X, the harpoon 31 is shot to capture the debris X, as illustrated in Fig. 5(a). After having captured the debris X, the mother ship 5 operates the robotic arm 53 to cut off the debris removing device 1 (end-mass 2) as illustrated in Fig. 7(a), and leaves. Next, the mother ship 5 moves toward other debris to be removed.

After having been cut off from the mother ship 5, the debris removing device 1 separates the end-mass 2 from the debris capturing device 3 and releases and expands the tether 4 into outer space, as illustrated in Fig. 5(b) and (c). In this case, when the end-mass 2 includes the propulsion system 21, the propulsion system 21 may be used to control the expansion direction and position of the tether 4.

A debris removing method to be described below can be easily performed by using the debris removing device 1 including the end-mass 2 capable of approaching the debris X to be removed, the debris capturing device 3 detachably mounted on the end-mass 2, and the tether 4 coupling the debris capturing device 3 and the end-mass 2. The debris removing method includes an approach process in which the debris capturing device 3 approaches the debris X, an attitude correction process in which the attitude of the debris capturing device 3 is corrected, a capturing process in which the debris X is captured by the debris capturing device 3, and a tether deployment process in which the tether 4 is released into outer space. In the attitude correction process, the debris capturing device 3 obliquely approaches the surface of the debris X, a part (the guide 33) of the debris capturing device 3 comes into contact with the surface of the debris X, and the attitude of the debris capturing device 3 is corrected with reference to the contact point. In the tether deployment process, the end-mass 2 is separated from the debris capturing device 3 and the tether 4 is released into outer space.

Thus, according to the debris removing device 1 and the debris removing method described above, the harpoon 31 is not shot from a distant position, but the debris capturing device 3 approaches the debris X so that the guide 33 comes into contact with the surface of the debris X to adjust the shooting angle of the harpoon 31. In this manner, the harpoon 31 can be shot at an appropriate shooting angle from a position close to the surface of the debris X, and thus kinetic energy necessary for shooting the harpoon 31 can be reduced and the reaction force can be reduced.

Since the harpoon 31 is shot at an adjusted shooting angle from the close position, it is possible to reduce the probability that the harpoon 31 will miss, be rebounded, or penetrate completely through the debris X, and thus accurately capture the debris X. In addition, the harpoon 31 can be reliably injected into the debris X, and thus the step of observing whether the harpoon 31 is injected into the debris X or a device for such observation can be omitted.

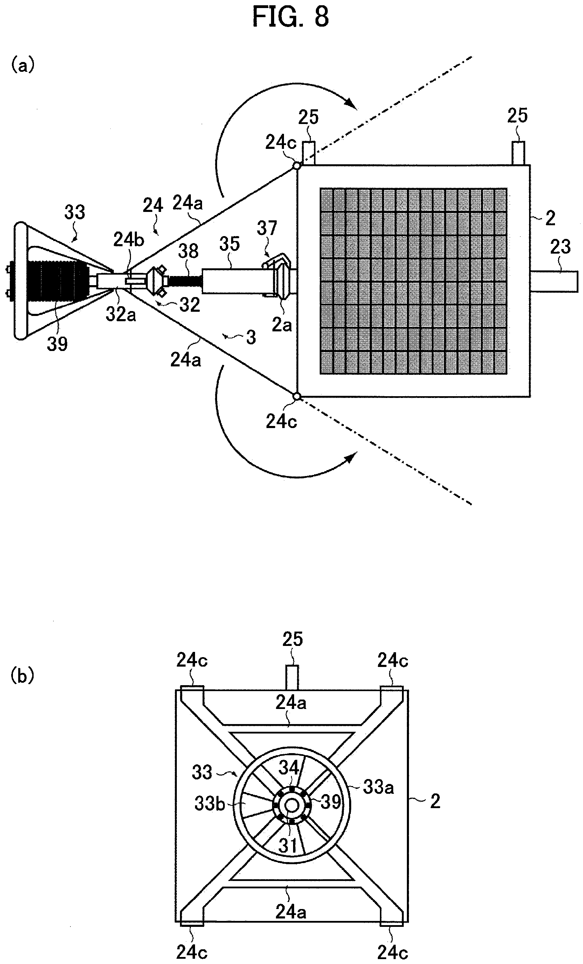

Part of the configuration of the debris removing device 1 described above may be changed. In Fig. 8, (a) is a side view illustrating a modification of a debris removing device to which the debris capturing device is applied, and (b) is a front view thereof. In Fig. 8(a) and (b), any component identical to that illustrated in Figs. 1 to 7 is denoted by an identical reference sign, and a duplicate description thereof will be omitted.

In the debris removing device illustrated in Fig. 8(a) and (b), the end-mass 2 includes a support device 24 supporting the shooting device 32. The support device 24 includes a pair of frames 24a, each rotatably connected to the end-mass 2 via a hinge 24c, and a restraining device 24b that restrains the front end portions of both of the frames 24a to the shooting device 32.

The pair of frames 24a are disposed at positions facing each other, with the shooting device 32 interposed therebetween, and sandwich the shooting device 32 therebetween. As illustrated in Fig. 8(b), each frame 24a has, for example, an A-letter shape and includes two leg portions each connected to the end-mass 2. The restraining device 24b includes, for example, a wire that restrains the front end portions of the pair of frames 24a in a state of being in contact with the shooting device 32 (specifically, the cylinder 32a), and a wire cutter configured to cut the wire. The shape of the frames 24a and the configuration of the restraining device 24b are merely exemplary, and not limited to the illustrated shape and configuration.

The shooting device 32 is supported by the casing 35 through the buffer 38, and thus can hold the positional relation with the casing 35 (specifically, the state in which the axis of the harpoon 31 and the piston 32b and the axis of the casing 35 are arranged substantially on an identical straight line) in gravity-free outer space. However, for example, gravitational force acts on the shooting device 32 when the debris removing device 1 is handled on the ground, and acceleration acts on the shooting device 32 when the debris removing device 1 is launched. In such a case, the leading end part of the debris capturing device 3 tends to tilt (the shooting device 32 is likely to take a state of being tilted with respect to the casing 35). According to the above-described debris removing device, since the support device 24 is installed to support the shooting device 32 by the end-mass 2, the tilting of the debris capturing device 3 can be reduced at handling on the ground or at launch.

For example, at a stage of the approaching state illustrated in Fig. 6(b), the support device 24 cuts the wire of the restraining device 24b to cause the frames 24a to retract to retracted positions, shown with a dashed and single-dotted line in Fig. 8(a). Although not illustrated, the hinge 24c or the restraining part may be provided with springs or the like for rotating the frames 24a to the retracted positions. A protrusion 25 formed on the surface of the end-mass 2 is a component exemplary for fixing the end-mass 2 to the mother ship 5 illustrated in Fig. 1. For example, the protrusion 25 is inserted into the fixation portion 54 which is an opening formed in the surface of the mother ship 5, and held by a holding device.

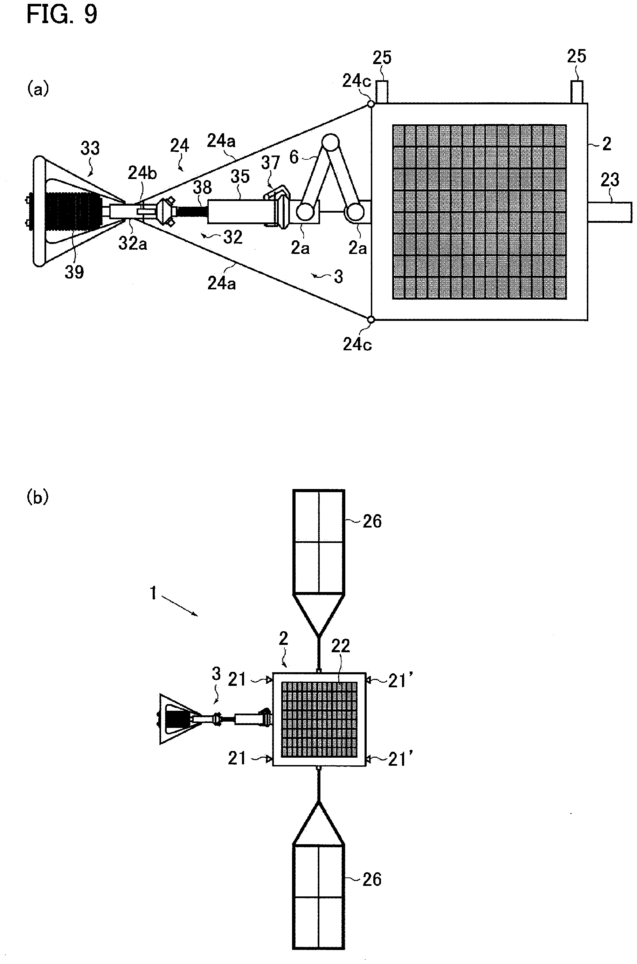

In Fig. 9, (a) and (b) are diagrams illustrating exemplary specific configurations of the debris removing device described with reference to Figs. 1 to 8. In the exemplary specific configuration illustrated in Fig. 9(a), a buffer 6 is provided to reduce the impact generated when the debris capturing device 3 comes into contact with the surface of the debris X. The buffer 6 is disposed, for example, at a middle part of a pipe body constituting the tether release port 2a of the end-mass 2, and achieved by a link mechanism, for example. The link mechanism connects, for example, a front section and a rear section formed by dividing the pipe body of the tether release port 2a into two front and rear pieces. Although the buffer 6 including two links is illustrated, the number of links is not limited to the illustrated number. The buffer 6 may be achieved by using an elastic body such as a spring or rubber, or a component such as a bellows in place of the link mechanism.

According to the debris removing device 1 thus configured, for example, the frames 24a are retracted at a stage of the approaching state illustrated in Fig. 6(b), and the impact generated when the debris capturing device 3 comes into contact with the debris X can be absorbed by the buffer 6 as illustrated in Fig. 6(c).

In the other exemplary specific configuration illustrated in Fig. 9(b), the end-mass 2 includes a propulsion system 21' for moving the debris capturing device 3. With this configuration, the debris removing device 1 does not need to be mounted on the mother ship 5 but can perform work by itself for removing the debris X. Thus, the work can be efficiently performed even when the number of the debris X to be removed is one, or when the next debris X to be removed is far away.

In this configuration, since the propulsion system 21' needs to be used to cause the debris capturing device 3 to approach the debris X, the end-mass 2 preferably includes solar cell paddles 26 as an electrical power source. Although not illustrated, the buffer 6 illustrated in Fig. 9(a) may be disposed between the end-mass 2 and the debris capturing device 3.

The following describes the configuration of a debris capturing device applicable to the debris removing device 1, in particular, a specific configuration of part of the harpoon 31 (refer to Fig. 3), with reference to the accompanying drawings.

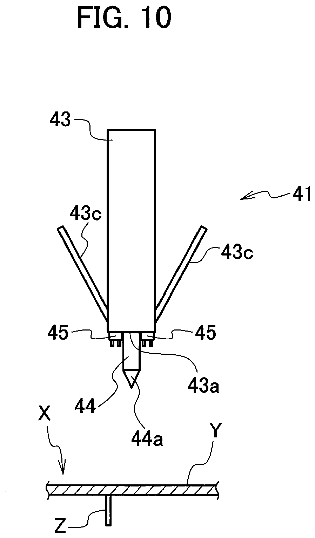

Fig. 10 is a diagram illustrating a specific configuration of a harpoon part of a debris capturing device according to a first embodiment. This harpoon 41 illustrated in Fig. 10 is used as the harpoon 31 of the debris capturing device 3 illustrated in Fig. 3, and includes a first harpoon part 43 and a second harpoon part 44. The first harpoon part 43 has a large-diameter cylindrical shape. The second harpoon part 44 having a diameter smaller than that of the first harpoon part 43 is provided as a protrusion protruding forward in the drive direction at the center of the leading surface 43a of the first harpoon part 43 on the leading end side in the direction of drive into the debris X.

A plurality of small-sized locking harpoon heads 45 are attached on the leading surface 43a of the first harpoon part 43 at intervals in the circumferential direction, surrounding the second harpoon part 44. The small-sized locking harpoon heads 45 may be, for example, self-piercing rivets (SPR). In addition, a plurality of barbs 43c that can be locked to the debris X are provided on an outer peripheral surface of the first harpoon part 43. A leading end part 44a is formed at a leading end of the second harpoon part 44. The shape of the leading end part 44a may be, for example, an acute head shape having a sharp leading end, a flat head shape having a flat leading end, a circular cone shape, or a shape similar to that of a leading end of a punch (the number of punches and the number of blades at the leading end of the punch are optional). In the harpoon 41, at least the leading end part 44a of the second harpoon part 44 is made of metal having a strength that allows penetration through a surface Y of the debris X.

In the debris capturing device 3 according to the present embodiment, the shooting device 32 illustrated in Fig. 3 shoots the harpoon 41 by force enough to cause the harpoon 41 to penetrate through part of the surface Y of the debris X illustrated in Fig. 10, which is not reinforced by a rib Z. The first harpoon part 43 and the second harpoon part 44 of the harpoon 41 being shot receive the force at ratios in accordance with the masses of the respective parts. (Hereinafter, for the purpose of illustration, a part of the surface Y, the back of which is reinforced by the rib Z, is referred to as a "reinforced part", and another part, the back of which is not reinforced by the rib Z, is referred to as a "non-reinforced part".)

When the harpoon 41 is shot by the shooting device 32, the leading end part 44a of the second harpoon part 44 protruding from the leading surface 43a collides with the surface Y of the debris X before the leading surface 43a of the first harpoon part 43 collides with the surface Y.

When the leading end part 44a of the second harpoon part 44 collides with the surface Y of the debris X, the leading end part 44a receives force exerted on the second harpoon part 44 among force exerted on the harpoon 41. The leading end part 44a of the second harpoon part 44, through the first harpoon part 43, also receives force exerted on the first harpoon part 43 yet to collide with the surface Y of the debris X among the force exerted on the harpoon 41.

Having received the force through the first harpoon part 43, the leading end part 44a of the second harpoon part 44 is driven into the surface Y to a depth at which at least the small-sized locking harpoon heads 45 of the leading surface 43a collide with the surface Y, for example, when driven to any of the reinforced part and the non-reinforced part of the surface Y of the debris X.

After the leading end part 44a of the second harpoon part 44 is driven into the surface Y, the leading surface 43a of the first harpoon part 43 collides with the surface Y. In this case, the leading surface 43a of the first harpoon part 43 receives the remaining force that is exerted on the first harpoon part 43 but not consumed among the force exerted on the harpoon 41 by the shooting device 32. The leading end part 44a of the second harpoon part 44 only receives the remaining force that is exerted on the second harpoon part 44 but not consumed among the force exerted on the harpoon 41 by the shooting device 32. In the present specification, "remaining force" is force corresponding to residual kinetic energy obtained by subtracting consumed kinetic energy from kinetic energy provided through shooting from the shooting device 32.

When the harpoon 41 is driven into the non-reinforced part of the surface Y, the first harpoon part 43 and the second harpoon part 44 both break through the surface Y against the reaction force of the surface Y. Accordingly, the entire harpoon 41 penetrates through the surface Y and enters into the debris X.

Then, the barbs 43c of the first harpoon part 43, having penetrated through the surface Y and entered inside largely open on the back side of the surface Y. The barbs 43c being opened have an external dimension larger than the diameter of a hole on the surface Y of the debris X, through which the entire harpoon 41 penetrates. Thus, when the tether 4 is pulled toward the end-mass 2, the barbs 43c are locked to the back of the surface Y, and the harpoon 41 cannot be pulled out to the outside through the hole on the surface Y. In this manner, the harpoon 41 is locked to the debris X so that the debris removing device 1 is connected with the debris X as illustrated in Fig. 5.

When the harpoon 41 is driven into the reinforced part of the surface Y, the force exerted on the harpoon 41 by the shooting device 32 is insufficient, and not the entire harpoon 41 can break through the surface Y against the reaction force of the surface Y. When the leading end part 44a of the second harpoon part 44 collides with the reinforced part of the surface Y, the harpoon 41 stops at a position where the second harpoon part 44 is driven into the debris X. The first harpoon part 43, the motion of which is regulated by the second harpoon part 44 having stopped, stops at a position before the leading surface 43a collides with the surface Y in some cases.

In this case, friction and metallic bonding occur at a contact part between the surface Y and the second harpoon part 44. The metallic bonding between the debris X and the second harpoon part 44 occurs because both exist in outer space and no oxide layer exists at at least the contact part therebetween when the second harpoon part 44 breaks through the surface Y.

When friction and/or metallic bonding occur between the debris X and the second harpoon part 44 in this manner, the harpoon 41 is not locked to the debris X, but the debris X and the second harpoon part 44 are solidly coupled with each other by frictional force and/or metallic bonding force. Accordingly, the debris removing device 1 is connected with the debris X by the harpoon 31 (harpoon 41) of the debris capturing device 3.

When the first harpoon part 43 collides with the reinforced part of the surface Y and the second harpoon part 44 collides with the non-reinforced part, the leading end part 44a of the second harpoon part 44 is driven into the debris X until the leading surface 43a of the first harpoon part 43 collides with the surface Y.

In this case, the small-sized locking harpoon heads 45 on the leading surface 43a of the first harpoon part 43 pierce into and are locked to the surface Y of the debris X. Since the small-sized locking harpoon heads 45 and the debris X exist in outer space, metallic bonding occurs at contact parts therebetween.

Accordingly, the debris X and the first harpoon part 43 are solidly coupled with each other by the friction or metallic bonding occurring between the debris X and any of the second harpoon part 44 and the small-sized locking harpoon heads 45, and the locking of the small-sized locking harpoon heads 45 to the debris X. In this manner, the debris removing device 1 is connected with the debris X by the harpoon 31 (harpoon 41) of the debris capturing device 3.

As described above, in the debris capturing device 3 according to the present embodiment, the harpoon 41 includes the first harpoon part 43 having a large diameter, and the second harpoon part 44 having a diameter smaller than that of the first harpoon part 43 and protruding from the leading surface 43a of the first harpoon part 43 in the direction of the drive into the debris X. With this configuration, when the harpoon 41 is driven toward the debris X, the first harpoon part 43 and the second harpoon part 44 receive force exerted on the harpoon 41 at the drive at ratios in accordance with the masses of the respective parts. Then, the second harpoon part 44 protruding from the leading surface 43a of the first harpoon part 43 collides with the debris X before the leading surface 43a of the first harpoon part 43 collides with the debris X.

When the leading end part 44a of the second harpoon part 44 collides with the debris X, the leading end part 44a receives force exerted on the second harpoon part 44 by the harpoon 41, and the leading end part 44a of the second harpoon part 44 receives the force exerted on the first harpoon part 43 yet to collide with the debris X by the harpoon 41.

Accordingly, the leading end part 44a of the second harpoon part 44 having a diameter smaller than that of the first harpoon part 43 receives all force exerted on the harpoon 41. This force facilitates the driving of the leading end part 44a of the second harpoon part 44 into the debris X when colliding with part of the debris X having a strength higher than that of the other part due to, for example, use of a thick material and reinforcement by a reinforcement member such as the rib Z.

Thus, when the shooting device 32 exerts on the harpoon 41 the force necessary for driving at least the leading end part 44a of the second harpoon part 44 into the debris X, the first harpoon part 43 or the second harpoon part 44 can be coupled with the debris X by frictional force, metallic bonding force, or mechanical engagement or lock therebetween.

Thus, it is possible to reduce the force exerted to drive the harpoon 41, even when the harpoon 41 is potentially driven into part of the debris X, which is reinforced by the rib Z or the like and has a high strength. Accordingly, it is possible to reduce the force necessary for driving the harpoon 41 into the debris X to attach the debris capturing device 3 to the debris X and reduce reaction force generated at the driving of the harpoon 41.

When the leading surface 43a of the first harpoon part 43 collides with, for example, part of the debris X having a strength higher than that of the other part, the force exerted on the leading surface 43a is not enough to penetrate through the surface Y of the debris X in some cases. In such a case, the second harpoon part 44 is driven into the debris X, whereas the first harpoon part 43 is disposed outside the debris X with the leading surface 43a colliding with the surface Y of the debris X.

In this case, when the first harpoon part 43 is disposed outside the debris X while the harpoon 41 is driven into the debris X, the second harpoon part 44 according to the present embodiment is coupled with the debris X by at least one of frictional force, metallic bonding force, and mechanical locking force. Thus, according to the present embodiment, the shot harpoon 41 can be easily coupled with the debris X.

The second harpoon part 44 may be omitted so that the harpoon 41 is coupled with the debris X by frictional force and/or metallic bonding force generated between the debris X and the small-sized locking harpoon heads 45 of the first harpoon part 43 or by mechanical lock therebetween. Alternatively, the small-sized locking harpoon heads 45 may be omitted so that the second harpoon part 44 is coupled with the debris X by frictional force and/or metallic bonding force when the leading surface 43a collides with the surface Y of the debris X.

In the harpoon 41 illustrated in Fig. 10 described above, the first harpoon part 43 and the second harpoon part 44 are integrally formed, but the second harpoon part 44 may be formed separately from the first harpoon part 43.

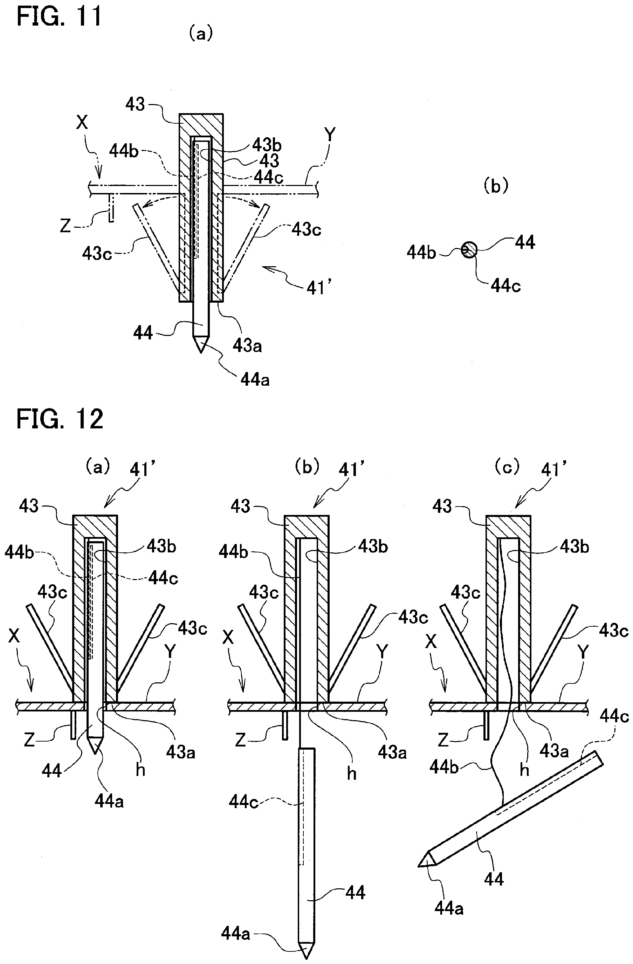

In Fig. 11, (a) is a diagram illustrating a specific configuration of a harpoon part of a debris capturing device according to a second embodiment, and (b) is a cross-sectional view of the second harpoon part in (a). In a harpoon 41' illustrated in Fig. 11(a), the first harpoon part 43 and the second harpoon part 44 of the harpoon 41 according to the first embodiment illustrated in Fig. 10 are separately provided.

In the harpoon 41' according to the second embodiment, a housing unit 43b having an opening at the leading surface 43a is formed inside the first harpoon part 43 having a large-diameter cylindrical shape, and the second harpoon part 44 is housed in the housing unit 43b. The leading surface 43a may be a flat surface or a circular cone taper surface or may have, for example, a shape similar to that of a leading end of a punch (the number of blades at the leading end of the punch is optional).

The second harpoon part 44 is made of metal having a strength that allows penetration through the surface Y of the debris X. The second harpoon part 44 is formed to have a length sufficiently larger than the depth of the housing unit 43b of the first harpoon part 43 so that the leading end part 44a of the second harpoon part 44 is exposed outside the first harpoon part 43 beyond the housing unit 43b when housed in the housing unit 43b of the first harpoon part 43. The shape of the leading end part 44a may be, for example, an acute head shape having a sharp leading end, a flat head shape having a flat leading end, circular cone shape, or a shape similar to that of a leading end of a punch (the number of punches and the number of blades at the leading end of the punch are optional). Sufficient clearance is provided between an inner peripheral wall of the housing unit 43b and an outer peripheral surface of the second harpoon part 44.

A wire 44b is a string and connects a bottom part of the housing unit 43b of the first harpoon part 43 and a middle part of the second harpoon part 44. When the second harpoon part 44 is housed in the housing unit 43b, the wire 44b is folded and housed in a groove 44c formed in a side surface of the second harpoon part 44 as illustrated in Fig. 11(a) and (b), for example.

In the present embodiment, the shooting device 32 exerts, on the harpoon 41', force enough for the harpoon 41' to penetrate through the non-reinforced part of the surface Y of the debris X. Then, the first harpoon part 43 and the second harpoon part 44 receive the force at ratios in accordance with the masses of the respective parts.

When the harpoon 41' is shot by the force exerted by the shooting device 32, the leading end part 44a of the second harpoon part 44 protruding from the leading surface 43a collides with the surface Y of the debris X before the leading surface 43a of the first harpoon part 43 collides with the surface Y.

When the leading end part 44a of the second harpoon part 44 collides with the surface Y of the debris X, the leading end part 44a receives force exerted on the second harpoon part 44 by the shooting device 32. The leading end part 44a of the second harpoon part 44 housed in the housing unit 43b also receives, through the housing unit 43b, force exerted on the first harpoon part 43 yet to collide with the surface Y of the debris X by the shooting device 32.

Accordingly, the leading end part 44a colliding with the surface Y of the debris X receives concentration of all force exerted on the harpoon 41' by the shooting device 32. Thus, whether the leading end part 44a collides with the reinforced part or the non-reinforced part of the surface Y, at least the second harpoon part 44 is driven into the surface Y up to such a depth that the leading surface 43a of the first harpoon part 43 collides with the surface Y as illustrated in Fig. 12(a).

After the leading end part 44a of the second harpoon part 44 is driven into the surface Y, the leading surface 43a of the first harpoon part 43 collides with the surface Y. Accordingly, the leading surface 43a of the first harpoon part 43 receives the remaining force that is exerted on the first harpoon part 43 but not consumed among the force exerted on the harpoon 41' by the shooting device 32. The leading end part 44a of the second harpoon part 44 only receives the remaining force that is exerted on the second harpoon part 44 but not consumed among the force exerted on the harpoon 41' by the shooting device 32.

When the harpoon 41' is driven into the non-reinforced part of the surface Y, the first harpoon part 43 and the second harpoon part 44 both break through the surface Y against the reaction force of the surface Y, and the entire harpoon 41' penetrates through the surface Y and enters into the debris X.

Then, the barbs 43c of the first harpoon part 43 largely open on the back side of the surface Y of the debris X illustrated by a virtual line in Fig. 11(a). The barbs 43c being opened have an external dimension larger than the diameter of a hole on the surface Y of the debris X through which the entire harpoon 41' penetrates. Thus, when the tether 4 is pulled toward the end-mass 2, the barbs 43c are locked to the back of the surface Y, and the harpoon 41' cannot be pulled out to the outside through the hole on the surface Y. In this manner, the harpoon 41' is locked to the debris X so that the debris removing device 1 is connected with the debris X through the harpoon 31 (harpoon 41') of the debris capturing device 3 as illustrated in Fig. 5.

When the harpoon 41' is driven into the reinforced part of the surface Y, the force exerted on the harpoon 41' by the shooting device 32 is insufficient, and not the entire harpoon 41' can break through the surface Y against the reaction force of the surface Y.

As illustrated in Fig. 12(a), when the second harpoon part 44 collides with the non-reinforced part of the surface Y and the first harpoon part 43 collides with the reinforced part, the leading end part 44a of the second harpoon part 44 is driven into the debris X until the leading surface 43a of the first harpoon part 43 collides with the surface Y. Similarly, when the second harpoon part 44 collides with the reinforced part of the surface Y, the leading end part 44a of the second harpoon part 44 is driven into the debris X until the leading surface 43a of the first harpoon part 43 collides with the surface Y. In these cases, the second harpoon part 44 flies out of the housing unit 43b of the first harpoon part 43 having collided with the surface Y and stopped, by inertia exerted in the direction in which the harpoon 41' is shot by the shooting device 32.

Then, when the remaining force that is exerted on the second harpoon part 44 but not consumed among the force exerted on the harpoon 41' by the shooting device 32 is sufficient for the second harpoon part 44 to break through the surface Y of the debris X, a state illustrated in Fig. 12(b) is achieved. Specifically, the second harpoon part 44 flying out of the housing unit 43b penetrates through the surface Y and enters into the debris X. Simultaneously, the wire 44b housed in the groove 44c is pulled out.

The length of the second harpoon part 44 sufficiently exceeds the opening diameter of a through-hole h formed at the surface Y of the debris X through which the leading end part 44a penetrates. The middle part of the second harpoon part 44 is connected with the wire 44b. With this configuration, when the tether 4 is pulled toward the end-mass 2 so that the wire 44b is pulled toward the debris removing device 1 together with the first harpoon part 43 connected with the tether 4, the second harpoon part 44 is pulled toward the surface Y in an orientation different from that when the second harpoon part 44 penetrates through the surface Y.

Accordingly, the second harpoon part 44 cannot be pulled toward the outside through the through-hole h of the surface Y, and is locked to the back of the surface Y as illustrated in Fig. 12(c). In this manner, the debris removing device 1 is connected with the debris X through the harpoon 31 (harpoon 41') of the debris capturing device 3.

When the force exerted on the second harpoon part 44 is insufficient, the second harpoon part 44 stops after being driven into the debris X up to or near such a depth that the leading surface 43a of the first harpoon part 43 collides with the surface Y as illustrated in Fig. 12(a) in some cases.

In such a case, friction or metallic bonding occurs at a contact part between the surface Y and the second harpoon part 44, and the debris X and the second harpoon part 44 are solidly coupled with each other by frictional force and/or metallic bonding force. In this manner, the harpoon 41' is not locked to the debris X but solidly coupled with the debris X so that the debris removing device 1 is connected with the debris X through the harpoon 31 (harpoon 41') of the debris capturing device 3.

As described above, similarly to the first embodiment, in the debris capturing device 3 according to the present embodiment, the harpoon 41' includes the first harpoon part 43 having a large diameter, and the second harpoon part 44 having a diameter smaller than that of the first harpoon part 43 and protruding from the leading surface 43a of the first harpoon part 43 in the direction of the drive into the debris X. The second harpoon part 44 is coupled with the debris X by at least one of frictional force, metallic bonding force, and mechanical locking force when the first harpoon part 43 is disposed outside the debris X while the harpoon 41' is driven into the debris X. Thus, the debris capturing device 3 according to the present embodiment can achieve effects the same as those of the first embodiment.

In the present embodiment, the first harpoon part 43 includes the housing unit 43b having an opening at the leading surface 43a, and the second harpoon part 44 is housed in the housing unit 43b while the leading end part 44a is protruding from the leading surface 43a. The second harpoon part 44 is connected with the first harpoon part 43 through the wire 44b having a dimension that allows the second harpoon part 44 to fly out of the housing unit 43b to the outside of the first harpoon part 43. The leading end part 44a of the second harpoon part 44 is driven into the debris X when the leading surface 43a of the first harpoon part 43 collides with the debris X.

The leading surface 43a of the first harpoon part 43 collides with the debris X after the second harpoon part 44 is driven into the debris X. In this case, the leading surface 43a of the first harpoon part 43 receives the remaining force exerted on the first harpoon part 43 but not consumed among force exerted on the harpoon 41'. The leading end part 44a of the second harpoon part 44 only receives the remaining force exerted on the second harpoon part 44 but not consumed among the force exerted on the harpoon 41'.

For example, the leading surface 43a of the first harpoon part 43 collides with the surface Y of part of the debris X having a strength higher than that of the other part but cannot penetrate through the surface Y of the debris X with force exerted on the leading surface 43a in some cases. In such a case, the leading surface 43a collides with the debris X and stops, but the second harpoon part 44 flies out of the housing unit 43b of the first harpoon part 43 by inertial force without stopping.

In this case, the second harpoon part 44 does not receive the remaining force exerted on the first harpoon part 43 having collided with the debris X but not consumed among the force exerted on the harpoon 41', but the second harpoon part 44 only receives the remaining force exerted on the second harpoon part 44 but not consumed among the force exerted on the harpoon 41'. Thus, the second harpoon part 44 flying out of the housing unit 43b of the first harpoon part 43 potentially cannot penetrate through the surface Y of the debris X when the remaining force is insufficient, or potentially can penetrate through the surface Y of the debris X only with the remaining force since the second harpoon part 44 has a diameter smaller than that of the first harpoon part 43.

When the second harpoon part 44 flying out of the housing unit 43b penetrates through the surface Y of the debris X, the second harpoon part 44 is locked to the debris X on the back of the surface Y of the debris X. Accordingly, the debris removing device 1 is connected with the debris X through the wire 44b, the first harpoon part 43, and the end-mass 2.

When the remaining force is insufficient and the second harpoon part 44 cannot penetrate through the surface Y of the debris X, the harpoon 41' stops at a position that the second harpoon part 44 is driven into the debris X and stopped. In this case, the second harpoon part 44 driven into the debris X is mechanically coupled with the debris X by, for example, frictional force. Alternatively, the second harpoon part 44 and the debris X directly contact each other without an oxide layer therebetween, for example, in outer space, and are solidly coupled with each other by metallic bonding. Accordingly, the second harpoon part 44 is coupled with the debris X, and the debris removing device 1 is connected with the debris X through the second harpoon part 44, the wire 44b, the first harpoon part 43, and the end-mass 2.

When the first harpoon part 43 and the second harpoon part 44 penetrate through the surface Y of the debris X, the harpoon 41' is locked to the debris X on the back of the surface Y, and the debris removing device 1 is connected with the debris X through the end-mass 2.

Thus, according to the present embodiment, when force necessary for driving at least the second harpoon part 44 into the debris X is exerted on the harpoon 41', the debris X and the second harpoon part 44 can be coupled with each other by frictional force and/or metallic bonding force. Alternatively, the second harpoon part 44 or the harpoon 41' penetrating through the surface Y can be locked to the debris X.

Thus, it is possible to reduce the force necessary for driving the harpoon 41' and reaction force generated at the driving of the harpoon 41', even when the harpoon 41' is potentially driven into part of the debris X having a high strength.

The wire 44b connects the first harpoon part 43 and the middle part of the second harpoon part 44 in the direction of flying out of the housing unit 43b. The second harpoon part 44 has, between both end parts in the flying direction, a length exceeding the opening diameter of the through-hole h formed in the debris X when driven into the debris X.

With this configuration, the middle part of the second harpoon part 44 mechanically interferes with a peripheral part of the through-hole h when the wire 44b connected with the middle part of the second harpoon part 44 is pulled toward the first harpoon part 43 while the second harpoon part 44 is positioned on the back side of the surface Y and the first harpoon part 43 is positioned on the outside of the surface Y. Accordingly, the second harpoon part 44 can be reliably locked to the back of the surface Y.

In the debris capturing device 3 according to the present embodiment, the first harpoon part 43 and the second harpoon part 44 of the harpoon 41' driven into the surface Y of the debris X are separately provided, and the second harpoon part 44 is housed in the housing unit 43b of the first harpoon part 43. When the harpoon 41' is driven into the non-reinforced part of the surface Y, the entire harpoon 41' penetrates through the surface Y and is locked to the back.

When the harpoon 41' is driven into the reinforced part of the surface Y until the second harpoon part 44 breaks through the surface Y, the second harpoon part 44 flies out of the housing unit 43b by inertia, whereas the first harpoon part 43 collides with the reinforced part of the surface Y and stops. Accordingly, the second harpoon part 44 penetrates through the surface Y and is locked to the back of the surface Y.

When the harpoon 41' is driven into the reinforced part of the surface Y until the second harpoon part 44 is driven into the surface Y but cannot penetrate through the surface Y, the second harpoon part 44 is then driven into the surface Y by the force exerted on the harpoon 41' by the shooting device 32. Accordingly, the harpoon 41' is coupled with the debris X by friction and/or metallic bonding between the second harpoon part 44 and the surface Y.

Thus, the force exerted on the harpoon 41' by the shooting device 32 to couple the harpoon 41' with the debris X does not need to be increased to the force by which the harpoon 41' breaks through the reinforced part of the surface Y of the debris X.

Thus, the harpoon 41' can be driven into and attached to the reinforced part of the surface Y with a small reaction force received by the debris capturing device 3 when the harpoon 41' is driven into the debris X by the shooting device 32 to couple the debris capturing device 3 with the debris X.

Thus, it is possible to reduce the force exerted to drive the harpoon 41', even when the harpoon 41' is potentially driven into part of the surface Y of the debris X having a high strength. Accordingly, it is possible to reduce the force necessary for driving the harpoon 41' into the debris X to attach the debris capturing device 3 to the debris X and the reaction force generated by the driving of the harpoon 41'.

The through-hole h corresponding to the outer diameter of the leading end part 44a is formed at the surface Y of the debris X into which the leading end part 44a of the second harpoon part 44 is driven. Then, when the second harpoon part 44 is further driven into the debris X, part of the second harpoon part 44 that passes through the through-hole h of the debris X moves from the leading end side to the rear end side. Thus, the second harpoon part 44 may be formed to have a smaller diameter on the rear end side in the direction of flying out of the housing unit 43b than on the leading end side. This configuration reduces contact between the debris X and part of the second harpoon part 44 that passes through the through-hole h, and thus reduces resistance due to the contact with the debris X when the second harpoon part 44 penetrates through the surface Y of the debris X, thereby facilitating penetration of the second harpoon part 44 through the surface Y so that the second harpoon part 44 is locked to the back.

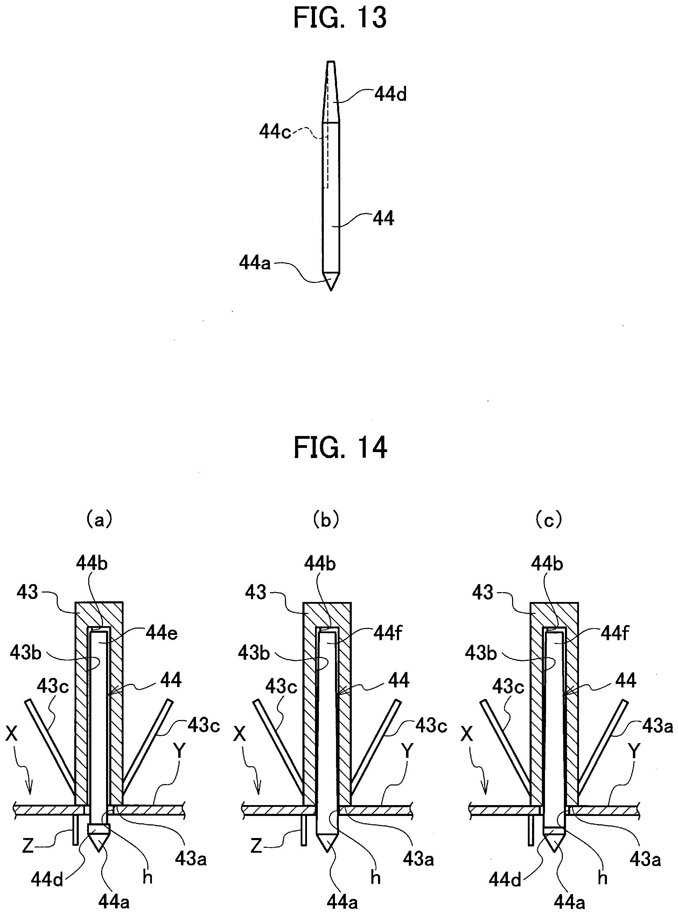

The rear end side of the second harpoon part 44 can be formed to have a diameter smaller than that of the leading end part 44a by, for example, forming the rear end side of the second harpoon part 44 into a taper shape as illustrated in Fig. 13. Alternatively, a stepped part may be provided between the leading end part 44a and the rear end of the second harpoon part 44, and the rear end side of the stepped part may be entirely formed to have a diameter smaller than that of the leading end part 44a.

Alternatively, part of the second harpoon part 44 except for the leading end part 44a, the harpoon part 44 which is housed in the housing unit 43b of the first harpoon part 43, may be formed to have a small diameter. For example, as illustrated in Fig. 14(a), a peripheral surface part 44e positioned inside the housing unit 43b of the first harpoon part 43 may be formed to have a diameter smaller than that of a peripheral surface part 44d, which is positioned outside the housing unit 43b and continuous with the leading end part 44a.

Alternatively, as illustrated in Fig. 14(b), a peripheral surface part 44f of the second harpoon part 44, except for the leading end part 44a, may be entirely formed in a taper shape. Alternatively, the configurations illustrated in Fig. 14 (a) and (b) may be combined as illustrated in Fig. 14(c). Specifically, the peripheral surface part 44f, positioned inside the housing unit 43b of the first harpoon part 43, may be formed to have a diameter smaller than that of the peripheral surface part 44d positioned outside the housing unit 43b and continuous with the leading end part 44a, and may be formed in a taper shape.

Although several embodiments are described above, each embodiment is merely an example provided to facilitate understanding of the present disclosure. The technical scope of the present disclosure is not limited to specific technical matters disclosed in the above-described embodiments, but also includes various deformations, changes, alternative technologies, and the like that can be easily derived from the above-described embodiments.

For example, in the above-described embodiments, the debris capturing device 3 may include a shooting direction adjustment mechanism (for example, a gimbal mechanism) configured to adjust or finely adjust the direction in which the harpoon 41 or 41' is shot by the shooting device 32.

The shapes of the first harpoon part 43 and the second harpoon part 44 according to the above-described embodiments are not limited to cylindrical shapes, but may be, for example, an elliptic cylindrical shape or a polygonal column shape. When the sectional shapes of the first harpoon part 43 and the second harpoon part 44 are not circular shapes, the maximum widths of the first harpoon part 43 and the second harpoon part 44 in a direction orthogonal to the axial direction thereof may be regarded as diameter dimensions.

The present application is based upon and claims the benefit of priority of the prior Japanese Patent Application 2017-008532, filed on January 20, 2017, the entire contents of which are incorporated herein by reference.

### INDUSTRIAL APPLICABILITY

The present disclosure is applicable to, for example, a space-debris capturing device and a space-debris removing device each configured to remove space debris drifting in outer space.

### REFERENCE SIGNS LIST

- 1: space-debris removing device
- 2: end-mass (body unit)
- 2a: tether release port
- 3: space-debris capturing device
- 4: tether
- 5: mother ship
- 6, 38: buffer
- 21, 21', 51: propulsion system
- 22: solar cell panel
- 23: grip portion
- 24: support device
- 24a: frame
- 24b: restraining device
- 24c: hinge
- 25: protrusion
- 26, 52: solar cell paddle
- 31, 41, 41': harpoon
- 31a, 43c: barb
- 31b: flow path
- 32: shooting device
- 32a: cylinder
- 32b: piston
- 32c: pyrotechnic valve
- 32d: stopper mechanism
- 32e: wall surface
- 32f: increased-diameter part
- 33: guide
- 33a: rim
- 33b: spoke
- 34: switch
- 35: casing
- 36: coil spring
- 37: lock device
- 37a: hook
- 37b: wire
- 37c: wire cutter
- 39: bellows
- 39a: leading end part
- 39b: rear end part
- 43: first harpoon part
- 43a: leading surface
- 43b: housing unit
- 44: second harpoon part
- 44a: leading end part
- 44b: wire (string)
- 44c: groove
- 44d, 44e, 44f: peripheral surface part
- 45: small-sized locking harpoon head
- 53: robotic arm
- 54: fixation portion
- h: through-hole
- X: debris (target debris)
- Y: surface
- Z: rib

## Claims

1. A space-debris capturing device comprising a harpoon to be driven into target debris as space debris to be removed, wherein the harpoon includes a first harpoon part having a large diameter, and a second harpoon part having a diameter smaller than the diameter of the first harpoon part and protruding from a leading surface of the first harpoon part in the direction of the drive into the target debris.

2. The space-debris capturing device according to claim 1, wherein the second harpoon part is configured to be coupled with the target debris by at least one of frictional force, metallic bonding force, and mechanical locking force when the first harpoon part is positioned outside the target debris while the harpoon is driven into the target debris.

3. The space-debris capturing device according to claim 1 or 2, wherein
the first harpoon part includes a housing unit having an opening at the leading surface,
the second harpoon part is housed in the housing unit of the first harpoon part, has a leading end part protruding from the leading surface, and is connected with the first harpoon part through a string having a dimension that allows the second harpoon part to fly out of the housing unit to an outside of the first harpoon part, and
the leading end part of the second harpoon part is configured to be driven into the target debris when the leading surface of the first harpoon part collides with the target debris.

4. The space-debris capturing device according to claim 3, wherein the string connects the first harpoon part and a middle part of the second harpoon part in the direction of the flying out of the housing unit, and
a length between both end parts of the second harpoon part in the direction of the flying exceeds an opening diameter of a through-hole to be formed at the target debris by the drive into the target debris.

5. The space-debris capturing device according to claim 3 or 4, wherein a diameter of the second harpoon part is smaller on a rear end side than on a leading end side in the direction of the flying out of the housing unit.

6. A space-debris removing device comprising:
a body unit; and
the space-debris capturing device according to any one of claims 1 to 5 configured to drive the harpoon from the body unit toward the target debris.

## Amended claims

### Amended claims under Art. 19.1 PCT

1. (Amended) A space-debris capturing device comprising
a harpoon to be driven into target debris as space debris to be removed,
wherein the harpoon includes a first harpoon part having a large diameter, and a second harpoon part having a diameter smaller than the diameter of the first harpoon part and protruding from a leading surface of the first harpoon part in the direction of the drive into the target debris, and
wherein the first harpoon part includes a housing unit having an opening at the leading surface,
the second harpoon part is housed in the housing unit of the first harpoon part, has a leading end part protruding from the leading surface, and is connected with the first harpoon part through a string having a dimension that allows the second harpoon part to fly out of the housing unit to an outside of the first harpoon part, and
the leading end part of the second harpoon part is configured to be driven into the target debris when the leading surface of the first harpoon part collides with the target debris.

2. The space-debris capturing device according to claim 1, wherein the second harpoon part is configured to be coupled with the target debris by at least one of frictional force, metallic bonding force, and mechanical locking force when the first harpoon part is positioned outside the target debris while the harpoon is driven into the target debris.

3. (Amended) The space-debris capturing device according to claim 1, wherein
the string connects the first harpoon part and a middle part of the second harpoon part in the direction of the flying out of the housing unit, and
a length between both end parts of the second harpoon part in the direction of the flying exceeds an opening diameter of a through-hole to be formed at the target debris by the drive into the target debris.

4. (Amended) The space-debris capturing device according to claim 2, wherein
the string connects the first harpoon part and a middle part of the second harpoon part in the direction of the flying out of the housing unit, and
a length between both end parts of the second harpoon part in the direction of the flying exceeds an opening diameter of a through-hole to be formed at the target debris by the drive into the target debris.

5. (Amended) The space-debris capturing device according to claim 1, wherein a diameter of the second harpoon part is smaller on a rear end side than on a leading end side in the direction of the flying out of the housing unit.

6. (Amended) The space-debris capturing device according to claim 2, wherein a diameter of the second harpoon part is smaller on a rear end side than on a leading end side in the direction of the flying out of the housing unit.

7. (Added) The space-debris capturing device according to claim 3, wherein a diameter of the second harpoon part is smaller on a rear end side than on a leading end side in the direction of the flying out of the housing unit.

8. (Added) The space-debris capturing device according to claim 4, wherein a diameter of the second harpoon part is smaller on a rear end side than on a leading end side in the direction of the flying out of the housing unit.

9. (Added) A space-debris removing device comprising:
a body unit; and
the space-debris capturing device according to claim 1 configured to drive the harpoon from the body unit toward the target debris.

10. (Added) A space-debris removing device comprising:
a body unit; and
the space-debris capturing device according to claim 2 configured to drive the harpoon from the body unit toward the target debris.

11. (Added) A space-debris removing device comprising:
a body unit; and
the space-debris capturing device according to claim 3 configured to drive the harpoon from the body unit toward the target debris.

12. (Added) A space-debris removing device comprising:
a body unit; and
the space-debris capturing device according to claim 4 configured to drive the harpoon from the body unit toward the target debris.

13. (Added) A space-debris removing device comprising:
a body unit; and
the space-debris capturing device according to claim 5 configured to drive the harpoon from the body unit toward the target debris.

14. (Added) A space-debris removing device comprising:
a body unit; and
the space-debris capturing device according to claim 6 configured to drive the harpoon from the body unit toward the target debris.

15. (Added) A space-debris removing device comprising:
a body unit; and
the space-debris capturing device according to claim 7 configured to drive the harpoon from the body unit toward the target debris.
